# EUROPEAN PATENT APPLICATION

(11) **EP 4 667 304 A1**
(43) Date of publication of application: **24.12.2025**
(21) Application number: 24182673.4
(22) Date of filing: 17.06.2024
(51) Int. Cl.: B60T 7/06, B60R 21/09, G05G 1/32, G05G 1/327

(54) **PEDAL BEARING SYSTEM**

(71) Applicant: Edscha Engineering GmbH, 42855 Remscheid (DE)
(72) Inventor: Gutierrez-Fernandez, Jose-Manuel, 39611 c/o Guarnizo, Polígono Industrial de Guarnizo 44 a 47 (ES)
(74) Representative: IPrime Bonnekamp Sparing Patentanwaltsgesellschaft mbH

(57) **Abstract**

The invention relates to a pedal bearing system capable to collapse in case of a crash, comprising a pedal holder arrangement (20); a pedal (30), and a pedal fixing arrangement (40), wherein the pedal holder arrangement (20) comprises two legs (21) provided with an oblong hole (22), wherein the oblong holes (22) receive a pivot bolt (32) arranged in the pedal (30) for rotational movement, wherein the pedal fixing arrangement (40) blocks the pivot bolt (32) in an end position of the oblong hole (22) such that the pivot bolt (32) and the pedal (30) can only carry out a rotational movement about a pedal axis, wherein the pedal fixing arrangement (40) comprises a double armed lever (41) being rotatable about a first lever axis (42) and having a first lever arm (41a) and a second lever arm (41b), and a clamping lever (43). A pedal bearing system capable to collapse in case of a crash that is easy to manufacture is achieved in that the clamping lever (43) is in pinching engagement between the pivot bolt (32) of the pedal (30) and a front end (41') of the first lever arm (41a) in a direction of the oblong hole (22), and that the facing front ends (41'; 432) of the first lever arm (41a) and the clamping lever (43) are configured to disengage when a force induced by a crash acts on the second lever arm (41b) such that the pivot bolt (32) of the pedal (30) can displace along the oblong hole (22).

## Description

The invention relates to a pedal bearing system capable to collapse in case of a crash, comprising a pedal holder arrangement, a pedal, and a pedal fixing arrangement.

In practice, a frontal crash of an automobile can induce injury to a driver of the automobile in case of a frontal part of the automobile, while being deformed, is also displaced towards the driver. In such a situation, the pedal, in particular the brake pedal, might hurt the driver's foot or feet, with a high likelihood of serious injury. Accordingly, it is a regular requirement to provide for a solution where the pedal is retracted away from the driver if a threshold displacement occurs.

DE 103 54 668 A1 describes a pedal bearing system capable to collapse in case of a crash, comprising a pedal holder arrangement, a pedal, and a pedal fixing arrangement. The pedal holder arrangement comprises two legs provided with an oblong hole, which oblong holes receive a pivot bolt of the pedal, wherein the pedal is configured to be rotatable about the pivot bolt using a sleeve. The pedal fixing arrangement blocks the pivot bolt in an end position of the oblong hole, such that the pivot bolt and the pedal can only carry out a rotational movement about a pedal axis in the end position. The pedal fixing arrangement comprises a first double armed lever being rotatable about a first lever axis arranged in the pedal holder, the first double armed lever having a first lever arm and a second lever arm that can be contacted in case of a crash to rotate the first double armed lever. The pedal fixing arrangement further comprises a second double armed lever rotatable about a second lever axis arranged in the pedal holder, the first double armed lever having a first lever arm and a second lever arm contacting the pivot bolt. The pedal fixing arrangement further comprises a connecting lever pivotally connecting the first lever arms of the first and second double armed lever in order to disengage the lever bolt when a crash occurs. The pedal fixing arrangement has to be arranged to turn around the pedal bolt and necessitates three articulations, entailing a complex slackness of the arrangement. Further, a plurality of parts need to be assembled, which is burdensome and expensive.

It is the object of the invention to indicate a pedal bearing system capable to collapse in case of a crash that is easy to manufacture.

This object is achieved according to the invention by a pedal bearing system as defined in independent claim 1.

A pedal bearing system capable to collapse in case of a crash comprises a pedal holder arrangement; a pedal, and a pedal fixing arrangement. The pedal holder arrangement comprises two legs provided with an oblong hole, wherein the oblong holes receive a pivot bolt arranged in the pedal for rotational movement, wherein the pedal fixing arrangement blocks the pivot bolt in an end position of the oblong hole such that the pivot bolt and the pedal can only carry out a rotational movement about a pedal axis. The pedal fixing arrangement comprises a double armed lever being rotatable about a first lever axis and having a first lever arm and a second lever arm, and a clamping lever in pinching engagement between the pivot bolt of the pedal and a front end of the first lever arm in a direction of the oblong hole, wherein the facing front ends of the first lever arm and the clamping lever are configured to disengage when a force induced by a crash acts on the second lever arm such that the pivot bolt of the pedal can displace along the oblong hole. The pedal bearing system is reliable and easy to assemble and necessitates only few parts.

Preferably, the pivot bolt is fixedly connected to the pedal for common rotational movement. As an alternative, the pedal can be rotatable about the pivot bolt such that a movement of the pivot bolt being in contact with the clamping lever is avoided.

Preferably, the double armed lever comprises a hole, wherein the legs of the pedal holder comprise aligned bores, and wherein a pin traverses the hole and the bores to pivotally connect the double armed lever with the pedal holder.

According to a preferred embodiment, the axis of the pin is in a prolongation of the oblong hole. This results in a compact design and small part sizes.

In a suitable improvement, the pin comprises a rotating portion traversing the hole and an excentric portion traversing the bores, such that rotation of the pin in the bores displaces the double armed lever in a direction of the oblong hole to ensure pinching engagement with the clamping lever. This allows to adapt the exact distance between the pin and the pivot bolt to match the size of the first lever arm and the clamping lever. Further, a head of the pin can be provided to match with a recess in the leg to avoid relaxation due to unintentional turning of the pin.

The pivot bolt is suitably arranged in a proximal end of the pedal, wherein a pedal pad is attached to a distal end of the pedal, and wherein an actuator attachment is provided on the pedal between the pivot bolt and the pedal pad.

In a preferred configuration, the first lever arm comprises a protrusion engaging with a recess of the clamping lever such that the disengagement can only be effected in one direction. The protrusion further allows to impart a moment from the first lever arm onto the clamping lever in order to achieve a common operation.

In a suitable embodiment, a proximal end of the clamping lever comprises an ear for rotational attachment to the pivot bolt. In this case, the clamping lever is connected in a rotatable manner to the pivot bolt, making it easier to have the pivot bolt rotating during conventional operation of the pedal. As an alternative, semi-circular shears, suitably adapted to the circumference of the pedal bolt, can be configured as proximal end of the clamping lever, allowing the clamping lever to easier disengage from the pedal bolt in case of a frontal crash impact, further also being easier to assemble.

The clamping lever preferrably comprises a distal surface facing away from the pivot bolt and having a central corrugation for defined contact with the front end of the first lever arm. The central corrugation allows the clamping lever to stay in pinching engagement between the pivot bolt of the pedal and a front end of the first lever arm even if some fatigue leads to relaxation of the components of the system.

The second lever arm is suitably configured to contact a frame member in case of a crash, the contact urging the double armed lever to rotate and disengage from the clamping lever. The frame member can be a bracket against which the pedal bearing system is urged in case of a frontal crash.

In a particularly preferred configuration, the clamping lever is configured as a U-shaped sheet metal part, the base of the U-shaped sheet metal part defining the distal end of the clamping lever and the ends of the legs of the U-shaped sheet metal part being assigned to the pivot bolt. Such clamping lever has a high stiffness and can be loaded to obtain the pinching engagement without risk of tilting or the like. Such clamping lever assembles properties of a rigid part and of a spring, thus improving a force-fit of the pedal fixing arrangement.

Preferrably, the double armed lever is configured as an L-shaped extruded metal part, wherein the second lever arm defining a vertical leg of the L-shaped extruded metal part protrudes over the pedal holder configured to contact an abutment surface in case of a frontal crash. The rotational movement of the double armed lever induces a rotation of the clamping lever about the pedal bolt, thus realizing a function similar to an articulation, but without need to provide a connecting pin between said parts.

It is possible to provide for a destructable or removable connector between the first lever arm and the clamping lever, in order to avoid unintentional discoupling. This results in particular that a somewhat strong impact is necessary to induce disengagement.

The pedal suitably is a brake pedal. Notwithstanding, the pedal can also be a clutch pedal or an accelerator pedal.

An automobile configured to be driven by a driver within the automobile and comprising a pedal bearing system as recited above may avoid injury of the driver and/or the passenger in case of a crash.

Further improvements, advantages and features will become appearant from the dependent claims as well as from the following description of preferred embodiments of the invention.

The invention is subsequently described with reference to the appended drawings with regard to preferred embodiments of the invention.
- Fig. 1: shows an exploded view of a first preferred embodiment of a pedal bearing system according to the invention.
- Fig. 2: shows a side view of the pedal bearing system according to Fig. 1 in mounted condition.
- Fig. 3: shows a side view of the pedal bearing system according to Fig. 1 and 2 when a crash occured.
- Fig. 4: shows an exploded view of a second preferred embodiment of a pedal bearing system according to the invention.
- Fig. 5: shows a side view of the pedal bearing system according to Fig. 4 in mounted condition.
- Fig. 6: shows a side view of the pedal bearing system according to Fig. 4 and 5 after a crash occured.

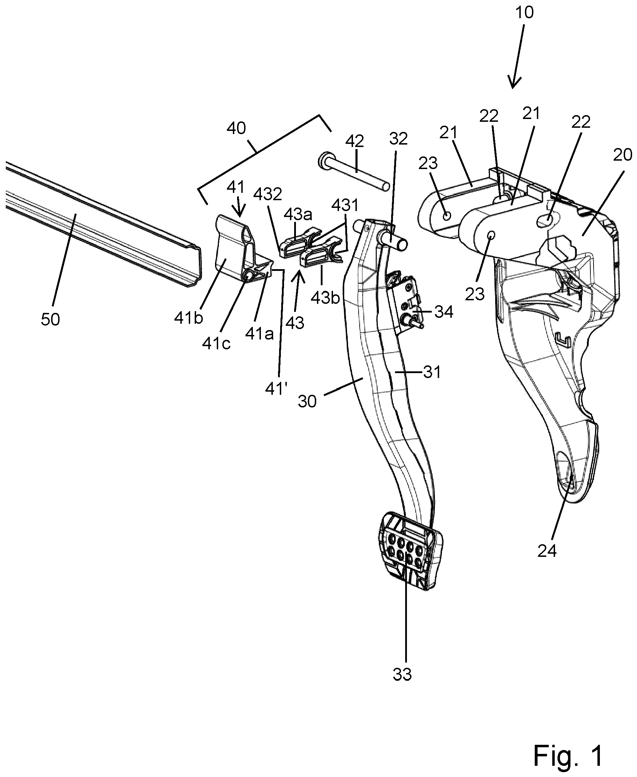

The preferred embodiment shown in Fig. 1 to 3 shows a pedal bearing system generally indicated by numeral 10 that is capable to collapse in case of a crash. Collapse generally means that the pedal is to be removed or retracted from a driver's foot in order to avoid injury.

The pedal bearing system 10 comprises a pedal holder arrangement 20, a pedal 30 and a pedal fixing arrangement 40 which will be described in more detail hereinbelow.

The pedal holder arrangement 20 is configured as forged part that can be affixed to a body of an automobile, wherein the pedal holder arrangement comprises two legs 21 protruding in a substantially horizontal direction. Each of the legs 21 comprises an oblong hole 22 close to an attachment surface of the pedal holder arrangement 20 and a bore 23 arranged at a distance from oblong hole 22, but substantially within an extension direction of oblong hole 22. The legs 21 are sufficiently rigid to support the pedal 30 and the pedal fixing arrangement 40. The pedal holder arrangement 20 comprises bores 24 to affix the pedal holder arrangement to the body of an automobile.

The pedal 30 is configured as U-shaped sheet metal part defining a pedal body 31, having a proximal end to which a pivot bolt 32 is attached in a non-rotatable manner and having a distal end to which a pad 33 for foot operation is attached. The pad can be covered by a weak plastic for operational comfort. The pivot bolt 32 traverses a corresponding opening of the proximal end of pedal body 31, but in an alternative, it is possible to provide two pivot bolt portions, each of them being attached to one side of pedal body 31. The pedal 30 further comprises an actuator attachment 34, to which an actuator can be attached, e.g. a brake actuator in case pedal 30 is configured as a brake pedal, as shown in the embodiment.

The pedal fixing arrangement 40 comprises several parts that are combined in order to provide for the pivot bolt 32 to be held in that end of oblong hole 22 which is distant from the bores 23. The pedal fixing arrangement comprises a substantially L-shaped double-armed lever 41 being rotatable about a first lever axis that is defined by the rotational axis of a pin 42, and a clamping lever 43 that is configured by two clamping lever elements 43a, 43b.

The double-armed lever 41 is made as an extruded metal part, in particular from aluminum and comprises a first lever arm 41a and second lever arm 41b, which are arranged in an angle approximately 90 to 100 degrees. In the knee formed by the first lever arm 41a and the second lever arm 41b, a hole 41c is provided in the double-armed lever, which can be traversed by pin 42, the corresponding surface of pin 42 providing a rotational couple with hole 41c. Further, pin 42 traverses bores 23 such that the double-armed lever 41 is rotationally coupled to the legs 21 of the pedal holder arrangement 20.

The two clamping lever elements 43a, 43b are elongated and comprises semi-circular shears 431 adapted to the circumference of pivot pin 32 at their end facing the pivot bolt 32. The ends 432 of clamping lever 43 facing the front end of first arm 41a is substantially flatened. The clamping lever elements 43a, 43b can e.g. be manufactured as extruded parts cut from an endless extruded string. The semi-circular shears 431 efficiently hold pivot bolt 32 when the first lever arm 41a and clamping lever 43 are aligned to hold the pedal 30 in its operational position.

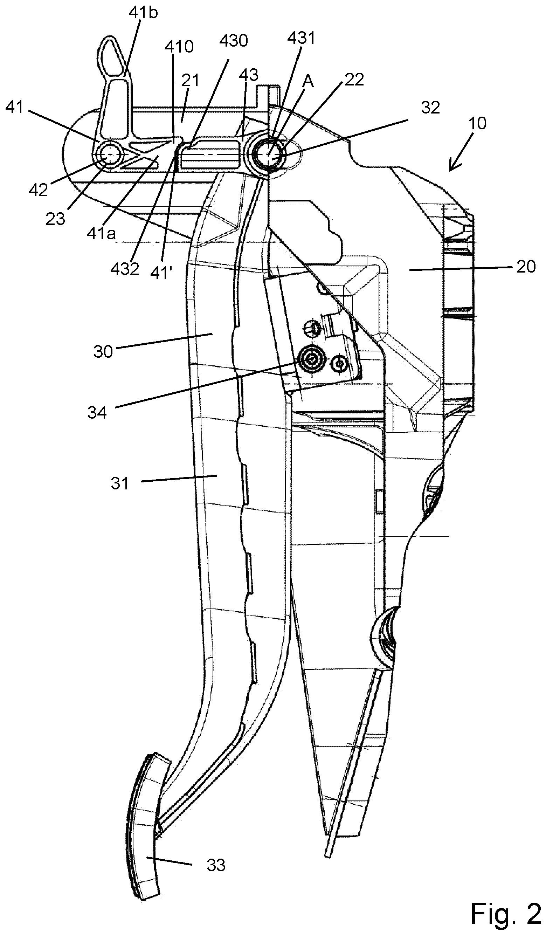

As one can particularly see in Fig. 2, the pedal fixing arrangement 40 is connected to legs 21 in such a manner that the clamping lever 43 (or both clamping levers 43a, 43b) is in pinching engagement between the pivot bolt 32 of the pedal 30 at proximal end and a front end 41' of the first lever arm 41a, wherein the clamping lever extends in the direction of the oblong hole, thus urging the pivot bolt to the foremost position within oblong hole 22, where the conventional operation axis A of pedal 30 is provided. The clamping lever 43 thus is in pinching engagement between the pivot bolt 32 of the pedal 30 and a front end 41' of the first lever arm 41a in a direction of the oblong hole 22.

In Fig. 1, a bracket 50 determining an abutment portion that is designed to enter into contact with second lever arm 41b of double-armed lever 41 when the pedal bearing system 10, together with the frontal part of the body of the automobile, is pushed backward responsive to a frontal crash impact. In this case, the displacement of the pedal bearing system 10 induces a rotational movement of double-armed lever 41 about pin 42 and subsequently, a disengangement of the first lever arm 41a of double-armed lever 41 and the clamping levers 43.

Once the double-armed lever is rotated, the clamping lever 43 can fall down, as neither connected to the double-armed lever 41 nor to the pedal 30 or the pivot bolt 32. Accordingly, the mutual contact surfaces 41', 432 of the first lever arm 41a and the facing clamping lever 43 define a predetermined braking point in case of a crash avoiding an articulation between the two parts such that a malfunction due e.g. to unbalanced load is avoided.

As one can particularly see in Fig. 2, the first lever arm 41a comprises an upper protrusion 410 engaging with a recess 430 of the clamping lever 43, ensuring that a disengagement of the parts 41, 43 cannot be achieved by pivoting said parts upward, but only downward.

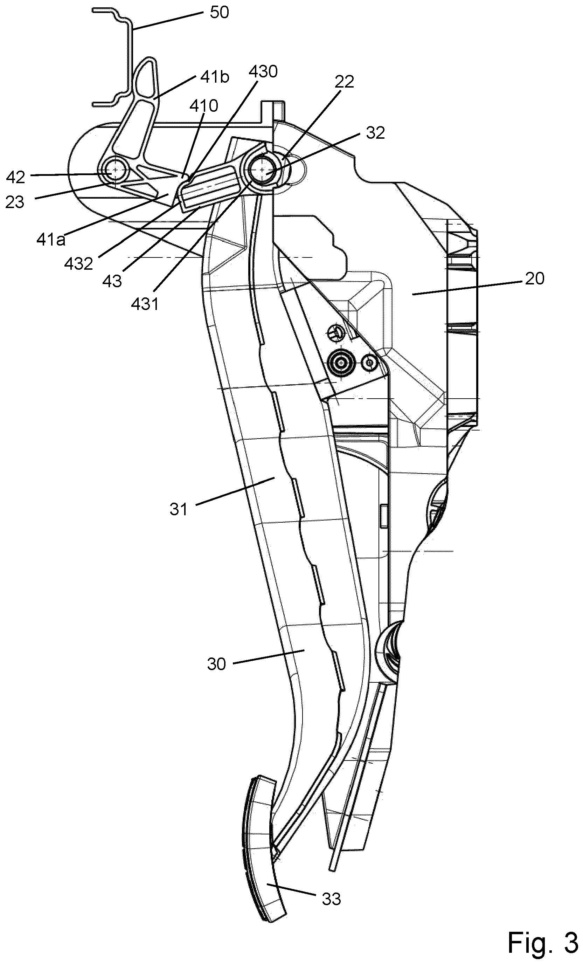

As to be seen in Fig. 3, a displacement of pedal bearing system 10 backwards towards bracket 50 results in an abutment of second lever arm 41b against said bracket 50, thus urging the double-armed lever around the rotational axis of pin 42, with the consequence that the first lever arm 41a is also pivoted downwards, with nose-type protrusion 410 pushing recess 430 downwards such that the clamping lever 43 rotates around pivot bolt 32 and allows pivot bolt 32 to reduce its distance towards the axis of bores 23 and thus to pivot around actuator attachment 34, with the result that the distal end of pedal 30 bearing the pedal pad 33 is pivoted towards the pedal holder arrangement 20, such that any injury with the foot of a passenger or driver is reduced or preferably avoided.

One can see that in Fig. 3 that the pivot bolt 32 is already displaced along oblong hole 22, in the present case a linear oblong hole, allowing distal end of pedal 30 to be displaced away from the passenger or driver.

One will note that the first lever arm 41a and the clamping lever 43 are rather short, thus allowing bores 23 arranged quite close to oblong holes 22. The first lever arm 41 and the clamping lever 43 are extending exactly in the direction of oblong hole 22 such that moments tending to bring the parts 41, 43 of pedal fixing arrangement 40 in disengagement are avoided.

One will easily conceive that instead of the two clamping levers 43a, 43b, a single clamping lever can be achieved by connecting those two parts by a base, which preferably entails a defined contact line or even surface with the first lever arm 41a.

One will easily understand that the presented pedal fixing arrangement is easy to assemble and cheap to manufacture, ensuring unlimited operation of pedal 30, as long as no crash occurs.

In the first embodiment, the oblong hole 22 is realized as a substantially linear oblong hole, with sufficient play to, in a crash situation, allow pivot bolt 32 to be displaced to the end of oblong hole 22 adjacent to bores 23. Of course, oblong hole 22 could also have a somewhat circular segment shape in order to facilitate a rotation about actuator attachment 34.

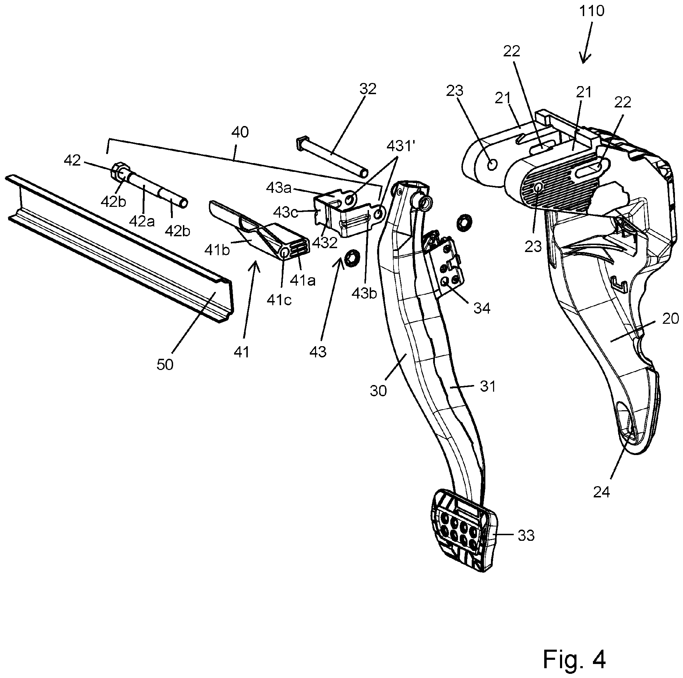

Pedal bearing system 110 is described as a second preferred embodiment with reference to Fig. 4 to 6, wherein the same or structurally comparable parts are designated by the same reference numerals as for the first embodiment. Accordingly, without prejudice, substantially the differences to the first embodiment will be described, where a skilled person will understand which adaptations and changes are necessary or suitable to achieve the embodiment.

Again, pedal bearing system 110 comprises a pedal holder arrangement 20 having two legs 21 with each having an oblong hole 22 which is oriented towards a bore 23, where the length of the oblong hole 22 is somewhat longer than in the previous embodiment.

Different from the previous embodiment, a pivot bolt 32 traverses a corresponding opening of the proximal end of pedal body 31 in order to connect it to the oblong holes 22 of pedal holder arrangement 20. Further, different from the previous embodiment, the clamping lever 43 is configured as U-shaped sheet metal part, having a base 43c which is configured to enter into contact with the first lever arm 41a of double-armed lever 41, while the legs 43a, 43b of clamping lever 43 comprise bores 431' which are traversed by pivot bolt 32. Accordingly, the clamping lever 43 cannot fall down, but is still attached to pivot bolt 32 in case of a crash.

The angle of L-shaped double-armed lever 41, which is produced by extruding aluminum, is somewhat increased compared to the first embodiment, wherein the opening angle between the first lever arm 41a and the second lever arm 41b is approximately 130 to 140 degrees. The angular position is determined according to the amount of displacement of the pedal bearing system prior to a crash, when the second lever arm 41b enters into contact with bracket 50.

The legs 43a, 43b of U-shaped clamping lever will, in the original built-in position, provide for the clamping between the pivot bolt 32 and the pin 42 via the first lever-arm 41a. Should, for any reason, the pressure of the legs 43a, 43b, e.g. wear of the bearing material or the like, lead to a relaxation, the base 43c of clamping lever 43 is provided with a substantially vertically extending corrugation 432, that, if some play occurs along the direction of oblong hole 22, will define an additional contact line with the front end 41' of first lever arm 41a.

A further particularity of the pedal bearing system 110 is that pin 42, besides its rotational portion 42a that is entered into hole 41c, comprises two excentric portions 42b, which are to be entered into bores 22. The excentric portions 42b allow, by rotation around their axis, that a portion 42a can be approached or retrieved from oblong hole 22, thus influencing on the distance of hole 41c, but also on the clamping or press fit of clamping lever 43 between the front surface 41' of first lever 41a and pivot bolt 32. Accordingly, when the pedal fixing arrangement 40 is mounted, it is still possible to adapt for tolerances and play in the manufacture of the assembled parts and to make sure that in particular clamping lever 43 is not lost due to a lack of press fit.

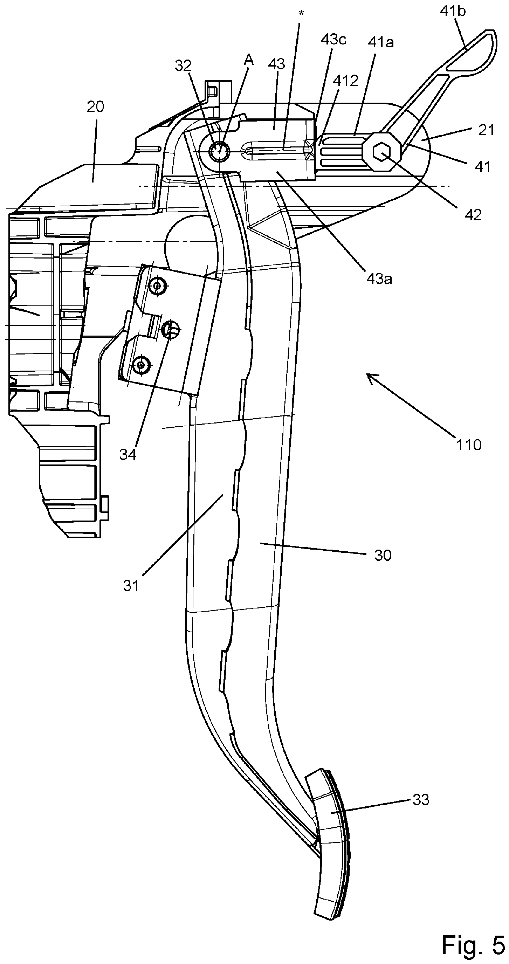

As one can see in Fig. 5 in the operational position of pedal 30 (shown from the opposite direction with reference to the first embodiment), the upper front end of first lever arm 41a of double-armed lever 41 shows a rounded corner 412, ensuring that responsive to an abutment of second lever arm 41b, the pedal fixing arrangement 40 can be moved and rotated downwards. To the contrary, the right angle corner 413 at the lower end of first lever arm 41a avoids that for any reasons, pivoting in the opposite direction can be achieved.

In particular in Fig. 5, one will see that a corrugation 435 is also provided in the sides of legs 43a, 43b of U-shaped clamping lever 43, said horizontal corrugations 435 increasing the rigidity of the clamping lever 43, in particular in its loading direction which is parallel to the oblong hole 22, and avoiding tilting or tilting out.

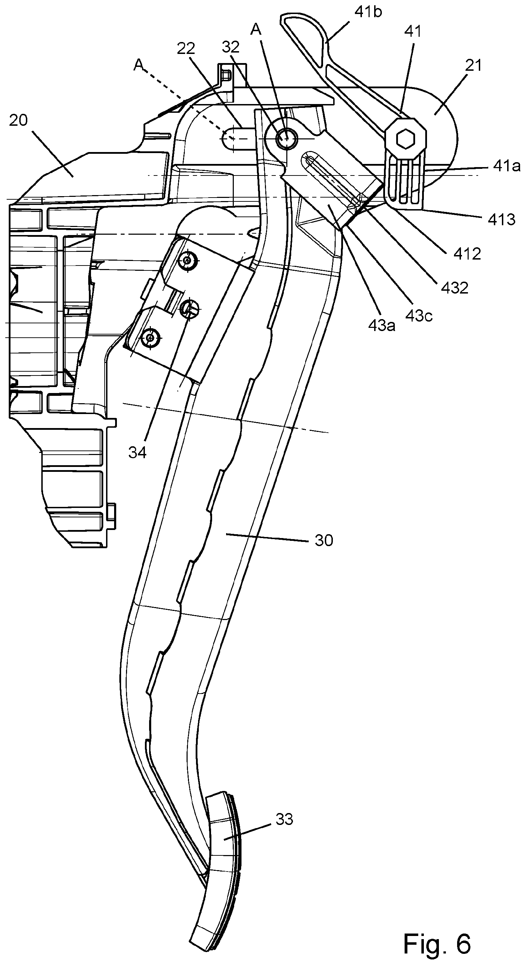

In Fig. 6, one can easily recognize that responsive to a rotation of double-armed lever 41, due to a crash, the first lever arm 41a is rotated downwards, which is allowed by the rounded corner 412. Further, the axis A of pivot bolt 32 displaces along the oblong hole 22 from the former position indicated in a dashed line to the other end of oblong hole 22, thus allowing a rotation about an actuator attachment 34 and pulling away from an operator the pedal 30 and in particular the pedal pad 33.

The invention has been described above with reference to two embodiments which embody the inventive concept described above. One may easily combine features of the two distinct embodiments in order to achieve improvements associated with each of the features of the embodiments within the other embodiment such that such combination is considered to be included within the disclosure of the present description.

The invention has been described with reference to preferred embodiments above, where only the clamping or press-fitting of the levers align substantially in parallel or approximately in parallel to the oblong hole 22 is achieved without having a breaking element like a shear pin or alike that needs to be broken before the operation responsive to a crash can occur. One will have to understand that it is still possible to provide for shear pin, in particular between abutting surfaces of the first lever arm and the clamping lever, in order to avoid that unintentional effects like vibrations or alike result in an unintentional pedal removal. As a matter of example, without prejudice, instead of a shear pin, a disposable or breakable plastic bracket connecting the two cited parts could also be provided. Such plastic bracket could easily disengage when a rotation is induced.

The invention has been described with reference to embodiments described where the geometrical shape of the facing front surfaces of the clamping lever and the first lever arm avoid a rotation in the wrong direction. Indeed, it is also possible to provide for an abutment, e.g. on leg 21, in order to make sure that a braking off of the two parts can only be realized in the opposite direction.

The invention has been described with reference to embodiments described where the pivot bolt 32 is fixedly arranged in the pedal body 31 for common rotational movement. It has to be understood that it also is possible to provide for the pedal body to be rotatable about a sleeve surrounding the pedal bolt, such that operation of the pedal does not impact on the pedal bolt that is in pincing engagement with the clamping lever, thus avoiding wear or vibrations.

## Claims

1. A pedal bearing system capable to collapse in case of a crash, comprising
a pedal holder arrangement (20);
a pedal (30), and
a pedal fixing arrangement (40),
wherein the pedal holder arrangement (20) comprises two legs (21) provided with an oblong hole (22),
wherein the oblong holes (22) receive a pivot bolt (32) arranged in the pedal (30) for rotational movement,
wherein the pedal fixing arrangement (40) blocks the pivot bolt (32) in an end position of the oblong hole (22) such that the pivot bolt (32) and the pedal (30) can only carry out a rotational movement about a pedal axis, wherein the pedal fixing arrangement (40) comprises a double armed lever (41) being rotatable about a first lever axis (42) and having a first lever arm (41a) and a second lever arm (41b), and a clamping lever (43), characterizend in
that the clamping lever (43) is in pinching engagement between the pivot bolt (32) of the pedal (30) and a front end (41') of the first lever arm (41a) in a direction of the oblong hole (22), and
that the facing front ends (41'; 432) of the first lever arm (41a) and the clamping lever (43) are configured to disengage when a force induced by a crash acts on the second lever arm (41b) such that the pivot bolt (32) of the pedal (30) can displace along the oblong hole (22).

2. The pedal bearing system according to claim 1, wherein the double armed lever (41) comprises a hole (41c), wherein the legs (21) of the pedal holder (20) comprise aligned bores (23), and wherein a pin (42) traverses the hole (41c) and the bores (23) to pivotally connect the double armed lever (41) with the pedal holder (20).

3. The pedal bearing system according to claim 2, wherein the axis of the pin (42) is in an prolongation of the oblong hole (22).

4. The pedal bearing system according to claim 2 or 3, wherein the pin (42) comprises a rotating portion (42a) traversing the hole (41c) and an excentric portion (42b) traversing the bores (23), such that rotation of the pin (42) in the bores (23) displaces the double armed lever (41) in a direction of the oblong hole (22) to ensure pinching engagement with the clamping lever (43).

5. The pedal bearing system according to any one of claims 1 to 4, wherein the pivot bolt (32) is arranged in a proximal end of the pedal (30), wherein a pedal pad (33) is attached to a distal end of the pedal (30), and wherein an actuator attachment (34) is provided on the pedal (30) between the pivot bolt (32) and the pedal pad (33).

6. The pedal bearing system according to any one of claims 1 to 5, wherein the first lever arm (41a) comprises a protrusion (410) engaging with a recess (430) of the clamping lever (43) such that the disengagement can only be effected in one direction.

7. The pedal bearing system according to any one of claims 1 to 6, wherein a proximal end of the clamping lever (43) comprises an ear (431') for rotational attachment to the pivot bolt (32).

8. The pedal bearing system according to any one of claims 1 to 7, wherein the clamping lever (43) comprises a distal surface facing away from the pivot bolt (32) and having a central corrugation (432) for defined contact with the front end (41') of the first lever arm (41a).

9. The pedal bearing system according to any one of claims 1 to 8, wherein the second lever arm (41b) is configured to contact a frame member (50) in case of a crash, the contact urging the double armed lever (41) to rotate and disengage from the clamping lever (43).

10. The pedal bearing system according to any one of claims 1 to 9, wherein the clamping lever (43) is configured as a U-shaped sheet metal part, the base (43c) of the U-shaped sheet metal part defining the distal end of the clamping lever (43) and the ends of the legs (43a, 43b) of the U-shaped sheet metal part being assigned to the pivot bolt (32).

11. The pedal bearing system according to any one of claims 1 to 10,
wherein the double armed lever (41) is configured as an L-shaped extruded metal part, wherein the second lever arm (41b) defining a vertical leg of the L-shaped extruded metal part protrudes over the pedal holder (40).

12. The pedal bearing system according to any one of claims 1 to 11,
wherein a rotational movement of the double armed lever (41) induces a rotation of the clamping lever (43).

13. The pedal bearing system according to any one of claims 1 to 12,
wherein a destructable or removable connector is provided between the first lever arm and the clamping lever.

14. The pedal bearing system according to any one of claims 1 to 13,
wherein the pedal (30) is a brake pedal.

15. An automobile configured to be driven by a driver within the automobile, comprising a pedal bearing system (10) according to any one of the preceding claims.
